# EUROPEAN PATENT APPLICATION

(11) **EP 1 205 409 A1**
(43) Date of publication of application: **15.05.2002**
(21) Application number: 01122424.3
(22) Date of filing: 20.09.2001
(51) Int. Cl.: B65G 23/08

(54) **Unit for a motorized roller**

(30) Priority: 13.11.2000 JP 2000345763
(71) Applicant: ITOH ELECTRIC COMPANY LIMITED, Kasai-shi, Hyogo 675-2302 (JP)
(72) Inventor: Nakamura, Tatsuhiko, Hyogo 679-2414 (JP); Fujimoto, Tomuyuki, Hyogo 673-1472 (JP); Tanaka, Masaki, Hyogo 670-0985 (JP)
(74) Representative: Paul, Dieter-Alfred, Dipl.-Ing.

(57) **Abstract**

A unit 50 comprising a driving portion 3, an output member 8 and a fixed shaft 11 is provided. A rotating force generated in the driving portion 3 is outputted externally. Thus a user can use a motorized roller by inserting the unit 50 in a roller body 13 provided by the user and having a diameter suitable for the situation.

## Description

### BACKGROUND OF THE INVENTION

### FIELD OF THE INVENTION

The present invention relates to a unit for a roller driven by its own built-in electric motor. Herein, this type of roller will be called "motorized roller".

The present invention relates also to a motorized roller itself.

### DESCRIPTION OF RELATED ART

The motorized rollers are in wide use in conveyors for transporting commodity and products. The motorized roller usually incorporates a speed reducer, and the typical examples are disclosed in Japanese Laid-open Patent Applications Nos. Hei 11-79358, Hei 8-188219, Hei 8-2643, Hei 7-279998, and Hei 6-227630.

The prior art motorized rollers are completely assembled in specialized factory before shipping. More specifically, a cylindrical roller body is cut into predetermined length, and then an electric motor and a speed reducer are housed within the roller body so as to assemble the prior art motorized roller. Then the assembled motorized roller is shipped and delivered to a user with fixed shafts protruding from both ends thereof.

Accordingly, a manufacturer of the motorized rollers standardizes the roller bodies of the rollers and produces only rollers of general-purpose sizes that sell well. Rollers of other sizes should be customized.

As described above, the prior art motorized rollers are already completed when they are shipped. Consequently a user cannot select a diameter or an entire length of the roller suitably.

Therefore, in designing a conveyor and the like, the user of the conveyor is restricted by the dimensions of motorized rollers standardized by the manufacturer of the rollers.

Motorized rollers are generally used for conveying articles such as completed products or components in factories. A roller with noncircular cross section should be used according to the shape or the like of the articles to be conveyed. Such rollers with noncircular cross sections are not commercially available as they are not standardized, thus they should be customized.

Even if a roller with circular cross section can be used, the roller may sag because of bending moment, in case that the entire length of or load on the roller is too large. To avoid the sag, a roller body with thicker wall thickness should be employed in the case. However, as described above, motorized rollers with dimensions not standardized should be customized, for they are not commercially available.

Even if manufacturers provide motorized rollers having different diameters or shapes, the rollers do not always include the one that is required by the users. Consequently, the prior art motorized rollers cannot fully satisfy the requirements of users.

### SUMMARY OF THE INVENTION

Accordingly, the invention is intended to provide units for motorized rollers which enable a user to assemble motorized rollers by himself determining diameter, length, thickness, shape or the like of any of the rollers at his will.

According to one aspect of the present invention to solve problems described above, a motorized roller is assembled by inserting a unit, which is formed by unitizing internal components of the motorized roller, in an external roller body, which is separately provided by the user.

The unit to be inserted in the roller body includes a casing, a fixed shaft protruding from the casing, a driving portion housed within the casing and including an electric motor that generates rotational force, and an output member rotatable upon reception of the force from the driving portion.

Herein, "a fixed shaft" means a shaft that is, or will be, fixed with respect to the ground or floor.

The casing is insertable in the roller body separately prepared, the fixed shaft protruding from the roller body and the output member engaging with the roller body from inside the roller body to rotate the roller body.

Preferably the output member has a larger radius than that of the casing.

A completed motorized roller made by inserting the unit in the roller body includes a casing, a first fixed shaft protruding from the casing, a driving portion housed within the casing and including an electric motor that generates rotational force, an output member having a larger radius than that of the casing and rotatable upon reception of the force from the driving portion, and a roller body, wherein the casing is inserted in the roller body, wherein the first shaft is supported rotatably relative to the roller body, wherein a tip of the first shaft protrudes from one end of the roller body, wherein the output member engages with the roller body from inside the roller body to rotate the roller body, wherein a second fixed shaft is supported rotatably relative to the roller body, and wherein a tip of the second shaft protrudes from the other end of the roller body.

Preferably the output member protrudes from one end of the casing.

Preferably the unit further comprises a rotatable output shaft protruding from the casing, wherein the output member is mounted unrotatably relative to the output shaft. The output member may be movable or unmovable relative to the output shaft.

The unit for the motorized roller of this invention has a fixed shaft, a driving portion, which is a vital portion of the roller, and an output member for outputting rotational force generated in the driving portion, all housed within the casing. The output member of the unit has a larger radius than that of the casing and is rotatable upon reception of a force from the driving portion.

The unit is combined with an external roller body having a cross-sectional shape, diameter, length and thickness desired by a user. More specifically, the casing of the unit is inserted in the roller body separately prepared, the fixed shaft protruding from an end of the roller body, the output member engaging with an inner surface of the roller body to rotate the roller body.

Thus the user can use a roller body having dimensions and a shape that are suitable for the situation.

Preferably the fixed shaft has an internal bore through which a cable for supplying electrical current to the motor in the driving portion runs.

Thus external wiring is achieved through the fixed shaft.

Preferably the output member is detachable and scrapable.

As the output member of the unit is detachable and scrapable, the user can scrape the member until it has a shape and dimensions in accordance with the inner shape and dimensions of a desired roller body. Herein, the "inner shape and dimensions of a roller body" mean the "shape and dimensions of the internal bore of a roller body". The inner dimensions include the inner diameter.

Preferably the driving portion includes a speed reducer as well as an electric motor. The motor generates a mechanical power, which is transmitted to the output member via the speed reducer with reduction.

Preferably the output member is directly in contact with an inner surface of the roller body to transmit power from the output member to the roller body.

Preferably the output member is in contact with an inner surface of the roller body via a foreign member to transmit power from the output member to the roller body.

Preferably power may be transmitted from the output member to the roller body either frictionally or by fitting connection.

Power may be transmitted from the output member to the roller body via pinning connection and/or screwing connection. The roller body may be caulked or slightly deformed to tightly fit with and connect to the output member so that power is transmitted from the member to the body.

A method for manufacturing a suitable motorized roller includes the steps of:
providing a unit including a casing, a fixed shaft protruding from the casing, a driving portion housed within the casing and including an electric motor that generates rotational force, and an output shaft rotatable upon reception of the force from the driving portion;
providing an output member;
providing a hollow roller body;
adjusting dimensions of the output member in accordance with inner shape and dimensions of the roller body;
mounting the output member to the output shaft; and
inserting the unit and the output member in the roller body.

Preferably the output member may be once mounted to the output shaft detachably to constitute a unit incorporating the output member. The output member may be detached from the output shaft while dimensions of the member are being adjusted in accordance with inner shape and dimensions of the roller body. Then the output member may be mounted to the output shaft again and the unit incorporating the output member may be inserted in the roller body to assemble the motorized roller.

### BRIEF DESCRIPTION OF THE DRAWINGS

Fig. 1 is a cross-sectional view of the motorized roller of an embodiment of this invention;
Fig.2 is an exploded perspective view of the motorized roller illustrated in Fig. 1;
Fig.3 is a perspective view of the unit for the motorized roller illustrated in Fig.1;
Fig.4 is a sectional view of the unit for the motorized roller illustrated in Fig.1;
Fig. 5 is a cross-sectional view of the unit taken along line A-A of Fig.4;

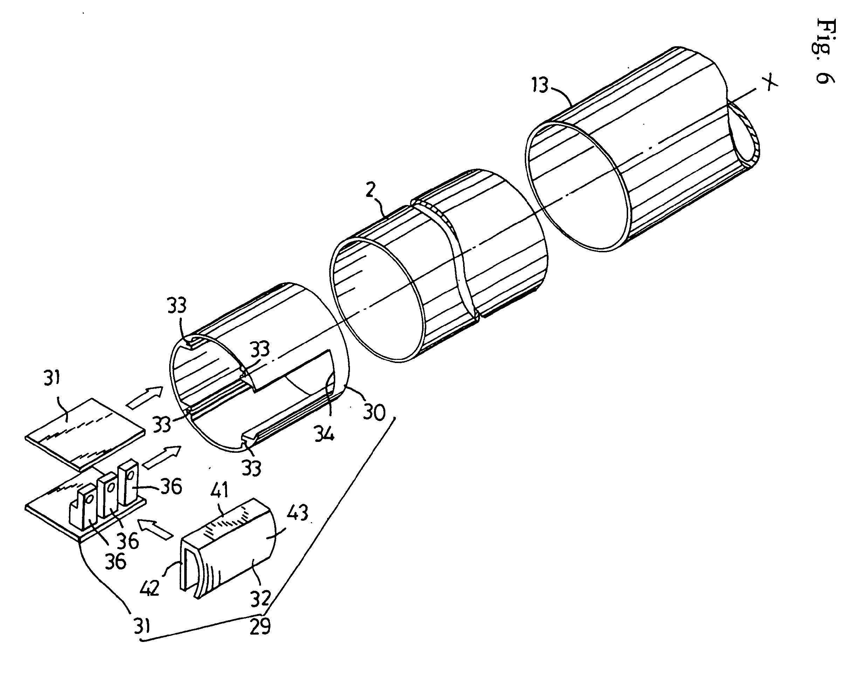

Fig.6 is a perspective view of the motor driver assembly illustrated in Fig.4;

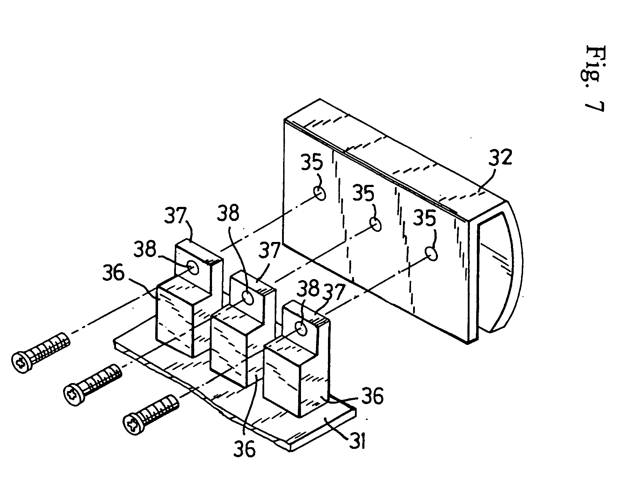

Fig.7 is an enlarged perspective view of the motor driving circuit board 31 and the radiating plate 32 illustrated in Fig.6; and
Fig.8 is an enlarged perspective view of the motor driving circuit board 31 and the radiating plate 32 of a modified example of this invention.

### DETAILED DESCRIPTION OF THE PREFERRED EMBODIMENTS

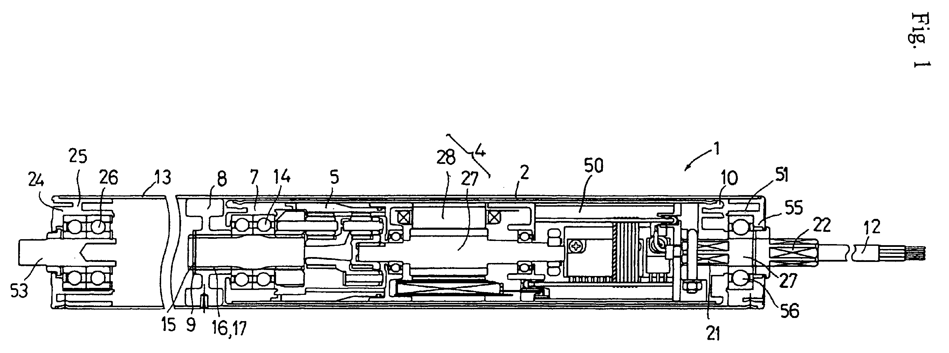

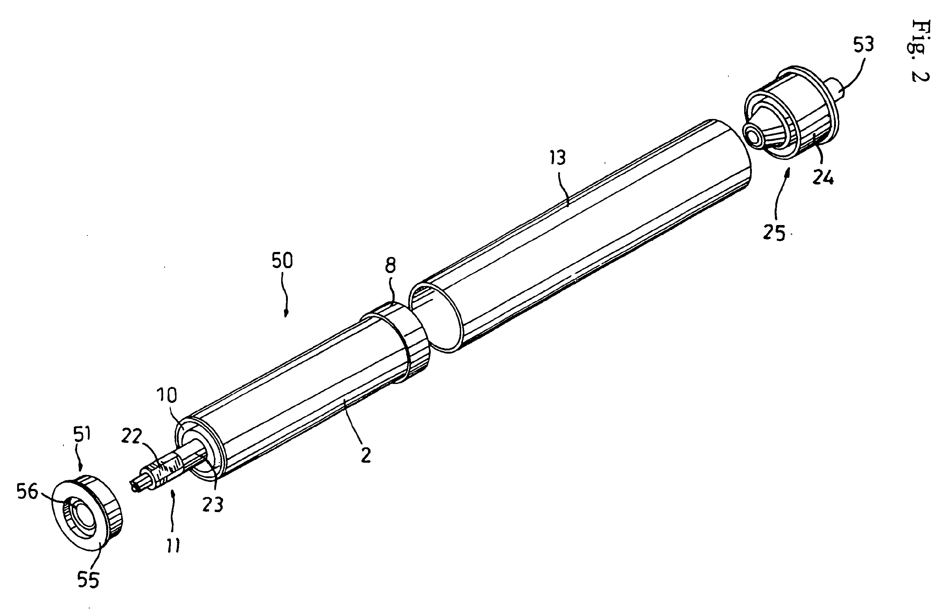

Fig. 1 and 2 show a motorized roller 1 embodying the present invention. The motorized roller 1 is constructed in a unit 50 in which main components are housed, and the unit 50 is fixed to a cylindrical outer shell 13, which is also called "external roller body" or "roller body".

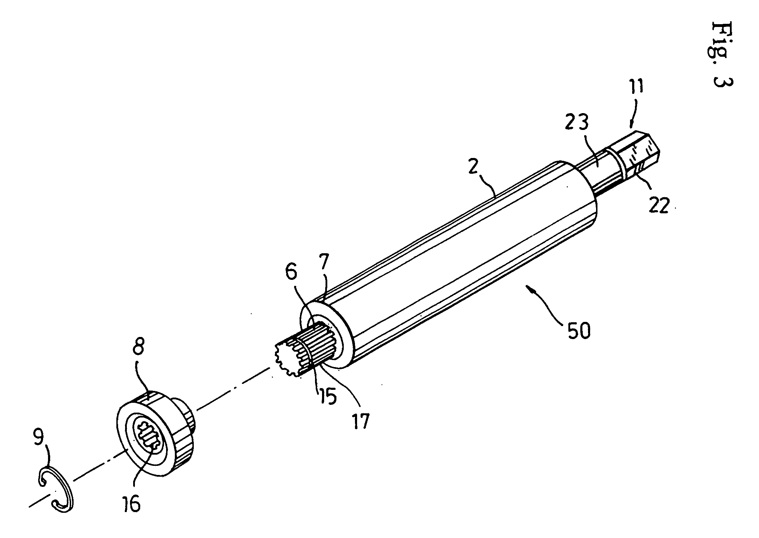

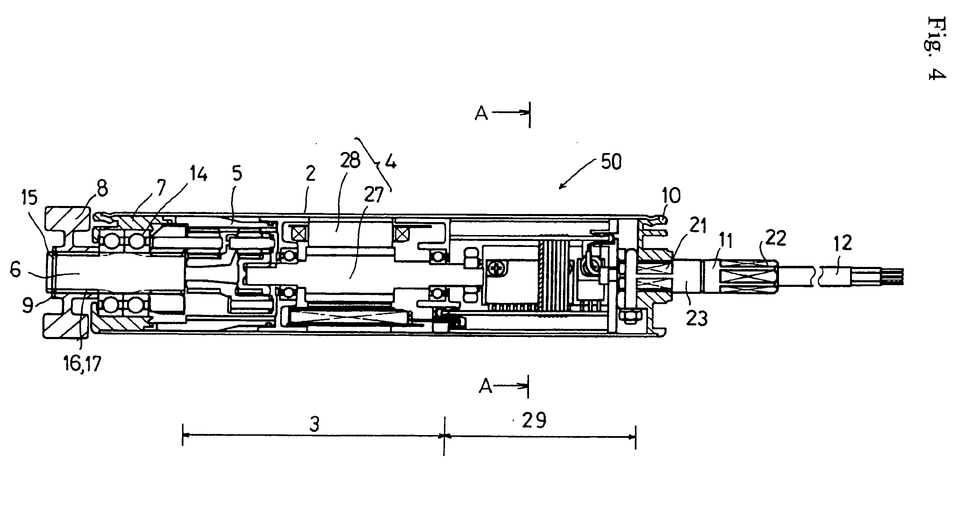

As illustrated in Fig. 3 and 4, the unit 50 includes a cylindrical casing 2, which, after assembly, acts as an inner shell of the motorized roller 1, a fixed shaft 11 protruding from the casing 2, a mechanical driving portion 3 built within the casing 2, a rotating member 8 having a larger radius than that of the casing 2, and a motor driver assembly 29 built within the casing 2 and controlling the mechanical driving portion 3, wherein the rotating member 8 is rotated by force generated in the mechanical driving portion 3.

Briefly, the unit 50 has a casing 2, which, after assembly, acts as an inner shell of the motorized roller 1, and a mechanical driving portion 3 and a motor driver assembly 29, which are mounted within the casing 2. The mechanical driving portion 3 specifically consists of an electrical motor 4 and a speed reducer 5.

The rotating member 8, which is also called "output member", is equipped at one end of the casing 2, slightly projecting radially from the casing 2, whereas the fixed shaft 11 externally protrudes from the other end of the casing 2. The rotating member 8 is engaged with a rotatable shaft 6, which will be hereinafter called "output shaft 6", extending from the mechanical driving portion 3 and protruding from the casing 2. The output shaft 6 and the fixed shaft 11 are mounted on the ends of the casing 2 by means of a output shaft holder 7 and a fixed shaft holder 10, respectively. Members composing the unit 1 are arranged coaxially so as to avoid an eccentric rotation.

More particularly, the casing 2 is made of a metal cylinder having open ends. The shaft holder 7 is made of plastics. The shaft holder 7 is practically of cylindrical shape with an outer diameter substantially equal to the inner diameter of the casing 2. The holder 7 is fitted into an end portion (left end portion in Fig. 3 and 4) of the casing 2.

The holder 7 has a pair of bearings 14 incorporated therein and disposed in series. Each of the bearings 14 has an inner diameter substantially equal to the diameter of the output shaft 6 and supports the shaft 6 rotatably so that the shaft 6 can rotate relative to the casing 2.

The fixed shaft holder 10 is also practically of cylindrical shape and is fitted into an end portion (right end portion in Fig. 4) of the casing 2.

The fixed shaft holder 10 has an inner diameter substantially equal to the diameter of the fixed shaft 11 so that the holder 10 fixes the shaft 11 to the casing 2 in an integral unit. More specifically, the holder 10 has no bearing interposed, and unifies the shaft 11 and the casing 2 as an integral and inseparable unit.

The rotating member 8 is practically of cylindrical shape and has an outer diameter larger than that of the casing 2. The rotating member 8 is made of zinc die cast.

When the rotating member 8 is to be fitted into the outer shell 13, the cylindrical surface of the member 8 is cut, scraped or ground and adjusted so that the outer diameter of the member 8 is substantially equal to the inner diameter of the outer shell 13.

The rotating member 8 has an internal gear 16 coaxial therewith. The internal gear 16 is provided so that rotational force of the output shaft 6, driven through the motor 4, is transmitted efficiently to the rotating member 8.

The output shaft 6 is supported rotatably relative to the casing 2 through the shaft holder 7 and disposed coaxial with the unit 50. The shaft 6 has an external gear 17 on the end portion thereof. The external gear 17 is formed to be in mesh with the internal gear 16.

In the illustrated roller 1 the output shaft 6 and the rotating member 8 are joined together by means of gears, but instead of gears, a key or a spline can be used.

A circular groove 15 is formed on the end portion of the output shaft 6. A C-ring 9 is fitted into the groove 15 to protect the rotating member 8 from dropping out of the shaft 6. More specifically, the rotating member 8 is detachably mounted on the output shaft 6 and a C-ring is fitted outside the member 8 to protect the member 8 from dropping out.

The fixed shaft 11 is disposed at the end portion of the unit 50 and secured integrally to and coaxially with the casing 2 through the fixed shaft holder 10. The fixed shaft 11 has an elongated axial bore, through which a cable 12 for feeding electric current runs. The cable 12 is connected to the motor driver assembly 29, through which the current is supplied to the driving portion 3.

The fixed shaft 11 has a hexagonal shape in cross section at either of end portions 21, 22. A circular cross section portion 23 with a smooth surface is formed between the hexagonal cross section portions 21, 22. One end portion 21 with hexagonal section is supported relatively unrotatably through the fixed shaft holder 10. The other end portion 22 with hexagonal section is used for securing the motorized roller 1 to a foreign member such as a conveyor frame after completing the motorized roller 1 by inserting the unit 50 in the outer shell 13.

The portion 23 with circular cross section contacts with a bearing 56 of an outer shell holder 51 as the unit 50 is inserted in the outer shell 13.

The motor driver assembly 29 includes a driver casing 30, a pair of driver circuit boards 31 and a heat radiating plate 32.

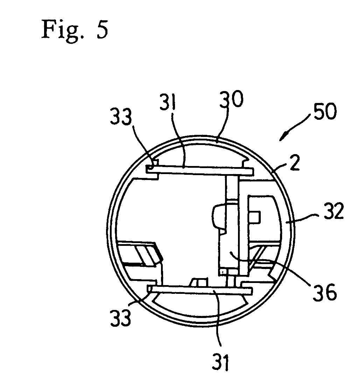

The driver casing 30 functions as a container for electronic devices. The driver casing 30 is a virtually cylindrical member made of plastic with an outer diameter substantially equal to the inner diameter of the cylindrical casing 2. The cylindrical surface of the driver casing 30 has a cutout 34. A heat radiating plate 32 is mounted on the driver circuit board 31 and the board 31 is inserted in the driver casing 30 through the cutout 34. Therefore, the width and the length of the cutout 34 are substantially equal to, or slightly larger than, those of the plate 32. Receptacles 33 consisting of two pairs of grooves parallel with each other are formed on the inner surface of the driver casing 30. As illustrated in Fig.5, the receptacles 33 support a pair of the driver circuit boards 31 parallel to an X axis.

In the illustrated examples, the cross section of the heat radiating plate 32 appears as if it were folded. The heat radiating plate 32 includes a planar wall 42 and a cylindrical wall 43 facing thereto with a clearance between them. A joint wall 41 connects between them. The planar wall 42 is contained within the driver casing 30 and an outer surface of the planar wall 42 is exposed to the inner space of the driver casing 30, which is a container for electronic devices. The planar wall 42 is in contact with the electronic devices on the driver circuit board 31 within the driver casing 30. The outer surface of the cylindrical wall 43 can be seen from outside the driver casing 30 through the cutout 34. As the curvature of the outer surface of the cylindrical wall 43 which can be seen from outside of the driver casing 30 is substantially identical to the curvature of the outer surface of the driver casing 30, the portion conforms smoothly to the outer surface of the driver casing 30.

The radiating plate 32 is made of metal, unlike the driver casing 30. The planar wall 42 has a plurality of threaded bores 35 so that electronic devices on the driver circuit board 31 are secured to the wall 42.

Electronic devices for controlling the motor 4 are mounted on the driver circuit board 31. The electronic devices include transistors 36, operational amplifiers, logical circuits, etc. Two driver circuit boards 31 are contained within a driver casing 30.

Each transistor 36 in this invention has on its back an electrode 37, which has a through-hole 38 for securing the transistor 36 to the radiating plate 32. In most cases, a collector electrode should be selected as the electrode 37.

For assembling the driver assembly 29, transistors 36 on the driver circuit board 31 are secured to the radiating plate by means of screws through the through-hole 38. Then edges of the driver circuit boards 31 are inserted in the receptacles 33 so that the radiating plate 32 is contained within the cutout 34.

Preferably thermally conductive grease may be applied between the transistors 36 and the radiating plate 32.

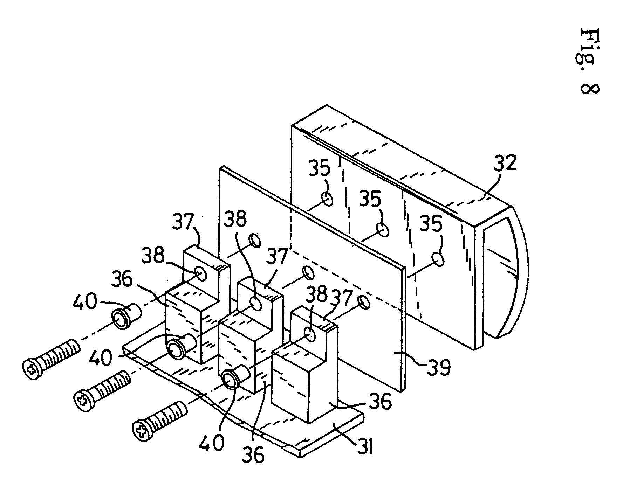

In case the collector electrodes is short-circuited when the transistors 36 are secured to the radiating plate 32 by means of screws and holes 35, 38, an electrical insulating film 39 can be sandwiched between the transistors 36 and the radiating plate 32 as illustrated in Fig. 8, and to increase heat conductivity silicone grease which has relatively high thermal conductivity is applied to at least one surface of the film 39. Preferably electrical insulating caps 40 may be disposed between the holes 38 and the screws.

The driver assembly 29 is so constructed that the outer surface of the cylindrical wall 43 of the radiating plate 32 contacts the inner surface of the cylindrical casing 2. Therefore, the radiating plate 32 contacts the electronic devices such as the transistors 36 inside the driver casing 30 and contacts the casing 2 outside the driver casing 30.

The driving portion 3 is composed of an electric motor 4 and a speed reducer 5. The motor 4 includes a rotor 27 utilizing permanent magnets and disposed on the central axis and a stator 28 formed of coils surrounding the rotor 27. Hall elements (not shown) are utilized for pole detectors of the motor.

The speed reducer 5, intervening between the motor 4 and the output shaft 6, transmits torque from the motor 4, reducing the rotational speed.

The rotation of the motor 4 is entirely controlled through the driver circuit board 31 of the driver assembly 29.

The illustrated roller 1 includes the unit 50 and the outer shell 13 to build the unit therein.

More specifically, the motorized roller 1 utilized in this invention is constructed by inserting the unit 50 in the outer shell 13 having desired shape, diameter, length and thickness.

Now, the manner of assembling the motorized roller 1 is described.

A user of the motorized roller 1 separately provides the outer shell 13 and outer shell holders 25, 51 to be equipped on both ends of the outer shell 13. The cross sectional shape, diameter, length and thickness of the outer shell 13 may be determined at discretion. As illustrated in the left side of Fig. 1, one outer shell holder 25 is constructed by integrating a cylindrical plug 24 to be fitted into the outer shell 13, a pair of bearings 26 disposed in series and a fixed shaft 53. As illustrated in the right side of Fig. 1, the other outer shell holder 51 is constructed by integrating a cylindrical plug 55 to be fitted into the outer shell 13 and a bearing 56.

Before inserting the unit 50 in the outer shell 13, the outer diameter of the rotating member 8 of the unit 50 is adjusted to the inner diameter of the outer shell 13 by machining.

In detail, at first the C ring 9 is detached from the output shaft 6, and then the rotating member 8 is separated from the output shaft 6. Then an outer surface of the rotating member 8 is cut, scraped or ground by means of a lathe or other machine tool so that the outer diameter of the member 8 is substantially identical to the inner diameter of the outer shell 13.

After finishing the machining, the rotating member 8 is put back so that it engages again with the output shaft 6 and the C ring 9 is attached to the output shaft 6.

Then, as illustrated in Fig. 2, the casing 2 of the unit 50 is inserted in the outer shell 13 so that the rotating member 8 contacts and engages with an inner surface of the outer shell 13. Preferably the engagement of the rotating member 8 with the outer shell 13 is strengthened by caulking or slightly deforming the outer shell 13 from outside or by punching the outer shell 13, if necessary. Pins may be inserted between the rotating member 8 and the outer shell 13, if necessary.

Then outer shell holders 25, 51 are equipped on both ends of the outer shell 13. In detail, as illustrated in Fig. 1 and 2, the outer shell holder 25, which is constructed by integrating the cylindrical member 24, the bearings 26 and the fixed shaft 53, is equipped on the end near the rotating member 8. On the other hand, the outer shell holder 51, which is constructed by integrating the cylindrical member 55 and the bearing 56, is equipped on the fixed shaft 11, with the fixed shaft 11 inserted in the inner ring of the bearing 56 and with the circular cross section portion 23 contacting the inner side of the inner ring.

The motorized roller 1 is assembled by the procedures described above.

After securing the unit 50 within the outer shell 13 and the outer shell holder 25, 51 to the outer shell 13, as electric power is supplied to the motor driver circuit board 31 and the driving portion 3, the rotor 27 of the motor 4 rotates about an axis due to change of magnetic flux. The speed reducer 5 gains torque from the rotor 27 and reduces rotation. The torque is further transmitted through the output shaft 6 to the rotating member 8 engaging with the shaft 6.

As the outer shell 13 is supported on the bearings 26, 56 rotatably relative to the fixed axes 11, 53, if the axes 11, 53 are secured to other unrotatable members, the outer shell 13 solely rotates relative to the axes by receiving power from the driving portion 3.

The inner shell casing 2 does not rotate with the outer shell 13, for the casing 2 is integral with the fixed axis 11.

In this embodiment, the driver circuit board 31 equipped within the outer shell 13 is fed with electricity through the cable 12 and controls current outputted to the motor 4 in response to conditions of the motor 4.

Therefore, electronic devices such as the transistors 36 mounted on the driver circuit boards 31 generate heat in operation.

As an internal resistance of semiconductor, contrary to metal, generally decreases with higher temperatures, if the temperature of the electronic devices are raised, too much electric current may be passed through the electronic devices, resulting in failure of control. To avoid such failure, in the illustrated roller 1, a radiating plate 32 is attached to the transistors 36 which generate heat, to conduct heat out of the driver assembly 29.

More specifically, in the motorized roller 1, as the heat-generating transistors 36 contact the radiating plate 32, which in turn contacts the inner shell casing 2, which has a larger radiating surface, heat generated in the transistors 36 is conducted through the radiating plate 32 and the inner shell casing 2 and dissipated externally.

More specifically, in the illustrated motorized roller 1, part of heat generated in the transistors 36 is dissipated externally directly through the radiating plate 32 and the other part of the heat is dissipated externally through the radiating plate 32 and the inner shell casing 2. Therefore, in the illustrated motor 1, the radiating plate 32 functions also as a heat conducting member.

In the motorized roller 1, heat generated in the transistors 36 can be conducted to the inner shell casing 2, as the radiating plate 32 made of metal contacts both the transistors 36 and the casing 2 when the driver assembly 29 is held within the casing 2.

By incorporating the driver circuit board 31 into the motorized roller, an improvement of labor efficiency and apparent simplicity and neatness are attained. Stabilized control is also attained since heat generated in the driver assembly 29 is dissipated externally through radiating plate 32.

Though the outer shell 13 and the rotating member 8 are engaged directly in the embodiment described above, another member or other members may intervene between the outer shell 13 and the member 8 for the sake of enhanced transmission of power or self-aligning of the axes.

The motorized roller 1 utilizes the unit 50 comprising a set of integrated members and functioning as both a power-generating unit and a power-transmitting unit. By utilizing the unit 50, a desired motorized roller can be fabricated at user's discretion.

As described above, the motorized roller 1 facilitates external wiring, by reducing the number of lead wires connected out of the roller, and assembling the roller to other components or parts.

Also in this invention, heat generated in the electronic devices contained in the motorized roller is dissipated externally through the radiating plate to protect the devices from damage and avoid failure of control.

In this way, the motorized roller of this invention enhances operational efficiency and outward simplicity and ensures safe control in operation.

It is to be understood that the invention is not limited to the specific embodiments thereof. Many apparently widely different embodiments of this invention may be made without departing from the spirit and scope thereof.

## Claims

1. A unit for a motorized roller comprising:
a casing;
a fixed shaft protruding from the casing;
a driving portion housed within the casing and including an electric motor that generates rotational force; and
an output member rotatable upon reception of the force from the driving portion:
wherein the casing is insertable in a roller body separately prepared, the fixed shaft protruding from one end of the roller body and the output member engaging with the roller body from inside the roller body to rotate the roller body.

2. The unit according to claim 1, wherein the output member has a larger radius than that of the casing.

3. The unit according to claim 1, wherein the output member protrudes from an end of the casing.

4. The unit according to claim 1 further comprising an output shaft protruding from the casing, wherein the output member is mounted unrotatably relative to the output shaft.

5. The unit according to claim 1, wherein the fixed shaft has an internal bore through which a cable for supplying electrical current to the motor in the driving portion runs.

6. The unit according to claim 1, wherein the output member is detachable and scrapable.

7. The unit according to claim 1, wherein the driving portion includes an electric motor and a speed reducer.

8. The unit according to claim 1, wherein the output member is directly in contact with an inner surface of the roller body.

9. The unit according to claim 1, wherein the output member is in contact with an inner surface of the roller body via a foreign member.

10. The unit according to claim 1, wherein power is transmitted frictionally from the output member to the roller body.

11. The unit according to claim 1, wherein power is transmitted from the output member to the roller body via at least one connection selected from the group consisting of caulking connection, pinning connection, and screwing connection.

12. A motorized roller consisting essentially of a unit and a roller body,
wherein the unit comprises:
a casing;
a first fixed shaft protruding from the casing;
a driving portion housed within the casing and including an electric motor that generates rotational force; and
an output member having a larger radius than that of the casing and rotatable upon reception of the force from the driving portion,
wherein the casing is inserted in the roller body;
wherein the first shaft is supported rotatably relative to the roller body;
wherein a tip of the first shaft protrudes from one end of the roller body;
wherein the output member engages with the roller body from inside the roller body to rotate the roller body;
wherein a second fixed shaft is supported rotatably relative to the roller body; and
wherein a tip of the second shaft protrudes from the other end of the roller body.

13. The motorized roller according to claim 12, wherein the first shaft has an internal bore through which a cable for supplying electrical current to the motor in the driving portion runs.

14. The motorized roller according to claim 12, wherein the driving portion includes an electric motor and a speed reducer.

15. The motorized roller according to claim 12, wherein the output member is directly in contact with an inner surface of the roller body.

16. The motorized roller according to claim 12, wherein the output member is in contact with an inner surface of the roller body via a foreign member.

17. The motorized roller according to claim 12, wherein power is transmitted frictionally from the output member to the roller body.

18. The motorized roller according to claim 12, wherein power is transmitted from the output member to the roller body via at least one connection selected from the group consisting of caulking connection, pinning connection and screwing connection.

19. A method for manufacturing a motorized roller comprising the steps of:
providing a unit including a casing, a fixed shaft protruding from the casing, a driving portion housed within the casing and including an electric motor that generates rotational force, and an output shaft rotatable upon reception of the force from the driving portion;
providing an output member;
providing a hollow roller body;
adjusting dimensions of the output member in accordance with inner shape and dimensions of the roller body;
mounting the output member to the output shaft; and
inserting the unit and the output member in the roller body.

20. A method for manufacturing a motorized roller comprising the steps of:
providing a unit including a casing, a fixed shaft protruding from the casing, a driving portion housed within the casing and including an electric motor that generates rotational force, an output shaft rotatable upon reception of the force from the driving portion, and an output member mounted detachably to the output shaft;
providing a hollow roller body;
detaching the output member from the output shaft;
adjusting dimensions of the output member in accordance with inner shape and dimensions of the roller body;
mounting the output member to the output shaft again; and
inserting the unit in the roller body.
